# EUROPEAN PATENT APPLICATION

(11) **EP 2 939 548 A1**
(43) Date of publication of application: **04.11.2015**
(21) Application number: 13869316.3
(22) Date of filing: 18.12.2013
(51) Int. Cl.: A23L 1/03, A21D 2/18, A21D 2/36, A21D 13/00, A21D 13/08, A23L 1/16, A23L 1/48

(54) **WATER-SOLUBLE PEA POLYSACCHARIDE-CONTAINING PHYSICAL PROPERTY IMPROVEMENT AGENT FOR WHEAT-BASED FOOD**

(30) Priority: 26.12.2012 JP 2012282127
(71) Applicant: Fuji Oil Company, Limited, Izumisano-shi Osaka 598-8540 (JP)
(72) Inventor: NAKAMURA, Akihiro, Tsukubamirai-shi Ibaraki 300-2436 (JP); SATO, Minami, Tsukubamirai-shi Ibaraki 300-2436 (JP); TOBE, Junko, Tsukubamirai-shi Ibaraki 300-2436 (JP); ADACHI, Norifumi, Tsukubamirai-shi Ibaraki 300-2436 (JP)
(74) Representative: Matthews, Derek Peter
(86) International application number: PCT/JP2013/083906
(87) International publication number: WO 2014/103833

(57) **Abstract**

In the present invention, it has been an object to obtain a physical property improvement agent for improving the various physical properties of wheat-based food such as bread, wheat-flour baked sweets, and noodles. By using a water-soluble pea polysaccharide, it is possible to obtain a physical property-improving effect in wheat-based food such as bread, wheat-flour baked sweets, and noodles. In bread and wheat-flour baked sweets, while changes in the mouthfeel caused by aging of starch are suppressed, the workability is enhanced by improving the spreadability of the dough, furthermore, the volume after baking is increased, and mouthfeel with good crispness and meltability in the mouth is obtained. In noodles, it is possible to suppress aging when braised noodles are stored at room temperature or with refrigerating.

## Description

### Technical Field

The present invention relates to a water-soluble pea polysaccharide used for improving the physical properties of wheat flour dough and of wheat-based food prepared by cooking, such as baking, oil-cooking, and braising. The water-soluble pea polysaccharide is characterized by having a function of enhancing mouthfeel and taste during storage, a function of enhancing the spreadability of dough, a function of increasing the volume after baking, and a function of enhancing the crispness and meltability in the mouth particularly in bread; having a function of enhancing mouthfeel and taste during storage, a function of enhancing the spreadability of dough, and a function of enhancing the crispness and meltability in the mouth in wheat flour baked sweets; and having a function of suppressing the aging in noodles.

### Background Art

Wheat-based food in which wheat flour is the main ingredient is food prepared by performing baking, oil-cooking, braising and the like on wheat flour dough, and is widely eaten as forms of bread, such as loaf bread, hot dog rolls, sweet buns, Danishes, rolls, steamed buns, and Chinese steamed buns; wheat flour baked sweets, such as cookies, sponge cakes, pies, muffins, and pancakes; and furthermore, noodles, such as udon, somen, Chinese noodles, and pasta.

The wheat-based food as described above tends to change in its mouthfeel due to aging of a starchy material. In food prepared by baking, such as bread, since the elasticity is markedly impaired to change the mouthfeel into tough mouthfeel with strong dry feeling and poor moist feeling, the quality is markedly impaired. In the case of noodles, especially cooked noodles, since the noodle quality changes into low quality with poor elasticity, low chewability and poor swallowing feeling, the quality is markedly impaired.

As a technique to suppress aging of starch, it is considered effective to blend a low-molecular sugar of which water retentivity is high, for example, oligosaccharides such as trehalose and maltose and sugar alcohols (polyols) such as sorbitol and maltitol, and an emulsifier such as sucrose fatty acid esters, polyglycerin fatty acid esters, and lecitin in order to suppress dehydration and recrystallization of amylose, which constitutes starch (Patent Literature 1). However, oligosaccharides and sugar alcohols impart unnatural sweetness to bread, and additionally, blending several percent, an excess amount, of them into wheat flour is necessary in order to completely suppress aging of starch, which makes the dough itself sticky to markedly worsen the processability and workability. Further, since an emulsifier, even in a very small amount, greatly changes the physical properties of dough, manufacture of noodles and bread in continuous production by machine is often interfered, and additionally, the flavor derived from the emulsifier remains in the end product to thereby impair the flavor specific to wheat flour.

Furthermore, market needs of preference for natural materials have increased in recent years, and a desire for natural functional materials in place of emulsifiers has increased. In addition to suppression of aging by these additives, amylase, which is widely used in rice cake, is an effective measure for suppression of starch aging in bread and noodles (Patent Literature 2). Unlike oligosaccharides, sugar alcohols, or emulsifiers, amylase has an advantage of not adversely affecting on the end product, but on the other hand, it cannot be said that the convenience is high because it is necessary to optimize the amount of the enzyme used and the reaction temperature in order to trigger the enzyme activity effectively. Moreover, starch is saccharified by adding an excess enzyme, resulting that the possibility that the physical properties of dough become inappropriate for processing is high, and additionally, a disadvantage of difficulty in stabilizing the quality of the end product is likely to occur.

In recent years, in relation to wheat-based food manufactured by braising, for example, bread, such as steamed buns and Chinese steamed buns, a method involving freezing immediately after manufacture has been employed as a method to suppress aging of the starchy material and to maintain good mouthfeel for a long period. There is a case where such food is rebaked or reheated in a heating cooking device such as a microwave oven immediately before eaten. In such a case, the dough is very strong in tension, and firm, and provides non-crisp mouthfeel due to evaporation of moisture by reheating, and furthermore, because the aging of starch rapidly proceeds as cooling, the food shrinks to form wrinkles on the surface, resulting in the markedly impaired value of a product. As an example to improve this point, a frozen Chinese steamed bun to be reheated by microwave ovens is suggested, wherein the bean paste of the Chinese steamed bun is mixed with agar jelly (Patent Literature 3). Further, a frozen Chinese steamed bun suitable for reheating by microwave ovens is suggested, wherein the bean paste is kneaded with dietary fiber powder (Patent Literature 4). However, with these methods, the effect of improving the water retentivity of the Chinese steamed bun dough by microwave-oven heating is low. With these methods, although the dough softness immediately after heating is improved, the bun becomes firm and strong in tension as cooling, and thus the improvement in the physical properties is not taken into account in the present circumstances.

Further, in relation to the dough physical properties of bread in the bread, in order to produce a uniform layer structure of Danish dough having excellent spreadability and small dough contraction after spread, a technique of blending an emulsifier comprising various glycerin fatty acid esters has been reported (Patent Literature 5). For the emulsifier, although an effect of improving mouthfeel such as crisp feeling can be confirmed in the Danish, an increase in the volume after baking is not mentioned at all, and additionally, addition of a large amount of the emulsifier as much as about 10% of the oil and fat is necessary, resulting that the specific flavor which wheat-based food has is impaired.

It has been reported that a water-soluble soy polysaccharide suppresses aging of starch and imparts soft mouthfeel in the case of being used in wheat flour products (Patent Literatures 6 and 7). Further, a bakery product which maintains soft mouthfeel for a long period by using the water-soluble soy polysaccharide in combination with lactic acid-fermented soy milk has been reported (Patent Literature 8). Furthermore, in the dough of steamed buns such as Chinese steamed buns which are microwaved and eaten, it has been reported that a strong water retention effect of a water-soluble soy polysaccharide provides the dough which is unlikely to become firm and imparts soft mouthfeel even after microwaved (Patent Literature 9).

Although the water-soluble soy polysaccharide suppressed aging of starch by being used in wheat-based food, its effect did not reach oligosaccharides such as trehalose, and also, since the flavor specific to soybean remained due to combination with soy milk, the preferred wheat flavor was impaired depending on types of bread. Moreover, although the mouthfeel in steamed buns after microwaved is soft feeling, the buns become firm with a decrease in the product temperature, and maintenance of soft mouthfeel for a long period has not been achieved. It has allergenicity because it is derived from soybean, and therefore a problem thereof is that its use opportunity is limited.

### Citation List

### Patent Literature

Patent Literature 1: Japanese Patent Application Laid-Open No. H7-79689
Patent Literature 2: Japanese Patent Application Laid-Open No. 2003-199482
Patent Literature 3: Japanese Patent Application Laid-Open No. H4-287669
Patent Literature 4: Japanese Patent Application Laid-Open No. H3-22941
Patent Literature 5: Japanese Patent Application Laid-Open No. 2003-92986
Patent Literature 6: Japanese Patent Application Laid-Open No. H5-7449
Patent Literature 7: Japanese Patent No. 3190066
Patent Literature 8: Japanese Patent No. 4582859
Patent Literature 9: Japanese Patent No. 3267914

### Summary of Invention

### Technical Problem

In the present invention, it has been an object to obtain a physical property improvement agent for improving various physical properties of wheat-based food such as bread, wheat-flour baked sweets, and noodles. In relation to bread and wheat flour baked sweets, it has been an object to obtain a physical property improvement agent which suppresses changes in the mouthfeel caused by aging of starch, enhances workability by an improvement in the spreadability of dough, furthermore increases the volume after baking, and provides mouthfeel with good crispness and meltability in the mouth; and additionally, in relation to noodles, it has been an object to obtain a physical property improvement agent which suppresses aging when braised noodles are stored at room temperature or refrigerated.

### Solution to Problem

As a result of intensive studies, the present inventor has found that, in bread and wheat flour baked sweets, changes in the mouthfeel caused by aging of starch are suppressed, the spreadability of dough is improved, furthermore, the volume after baking is increased, and mouthfeel with good crispness and meltability in the mouth is provided, by using a water-soluble pea polysaccharide. Furthermore, it has been found that using the water-soluble pea polysaccharide in noodles enhances the dough physical properties, and suppresses aging when braised noodles are stored at room temperature or refrigerated. That is, the present invention relates to:
(1) A physical property improvement agent for wheat-based food, comprising a water-soluble pea polysaccharide.
(2) The physical property improvement agent according to (1), wherein the water-soluble pea polysaccharide is derived from a grain part of a pea seed from which a seed coat is removed.
(3) The physical property improvement agent according to (1) or (2), wherein the pea is derived from a yellow pea seed.
(4) The physical property improvement agent according to (1), having any of a function of suppressing starch aging during storage, a function of enhancing spreadability of dough, a function of increasing a volume after baking, and a function of enhancing crispness and meltability in a mouth.
(5) The physical property improvement agent according to (1), wherein 0.01% by weight or more and 5% by weight or less of the physical property improvement agent is blended relative to wheat flour.
(6) The physical property improvement agent according to (1), wherein the wheat-based food is bread.
(7) Bread wherein 0.01% by weight or more and 5% by weight or less of the physical property improvement agent according to (6) is blended relative to wheat flour.
(8) The bread according to (7), wherein the bread is frozen bread dough.
(9) The bread according to (8), wherein the dough is frozen after final proof.
(10) The physical property improvement agent according to (1), wherein the wheat-based food is a wheat flour baked sweet.
(11) A wheat flour baked sweet, wherein 0.01 % by weight or more and 5% by weight or less of the physical property improvement agent according to (10) is blended relative to wheat flour.
(12) The physical property improvement agent according to (1), wherein the wheat-based food is a noodle.
(13) The physical property improvement agent according to (12), having a function of suppressing starch aging when a braised noodle is stored at room temperature or with refrigerating.
(14) A noodle wherein 0.01% by weight or more and 5% by weight or less of the physical property improvement agent according to (12) is blended relative to wheat flour.

### Advantageous Effects of Invention

According to the present invention, it is possible to prepare bread and wheat flour baked sweets of which volume after baking is increased and of which crispness and meltability in the mouth (disintegratability in the mouth) are good. Additionally, since it is possible to easily prepare dough having a homogeneous texture structure due to enhancement of the spreadability of dough, the work efficiency is enhanced, and it is also possible to suppress deterioration in the quality during refrigerated and frozen storage by a function of preventing aging of starch. Further, in relation to noodles, it is possible to prepare noodles having slippery feeling and elasticity by suppressing aging of starch when stored at room temperature or with refrigering after braising.

### Description of Embodiments

### (Wheat-based food)

The wheat-based food of the present invention is food prepared by heating, such as baking, oil-cooking or braising, wheat flour dough, and examples include bread, wheat flour baked sweets, and noodles described below.

### (Bread)

The bread of the present invention refers to loaf bread, hot dog rolls, sweet buns, Danishes, rolls, dressed bread, steamed buns, Chinese steamed buns, and the like described hereinbelow. Baguettes, bagels, ciabatta, pita, pizza crusts, rye bread, and the like are also targets, as bread, of the present invention.

### (Loaf bread and a hot dog roll)

The loaf bread of the present invention is bread which is widely eaten as staple food in Japan and means bread baked in a mold for three pieces of loaf bread. Strong flour, weak flour, powdered milk, sugar, salt, yeast, water and the like are mixed with butter, margarine or the like to thereby form dough. Examples of the loaf bread include one prepared by rounding this dough, resting it, roll-forming it by a molder, placing three to four pieces of the dough in a loaf bread mold, final-proofing and baking the dough. There are rectangular loaf bread, which is baked in a mold with a lid, and round-top loaf bread (such as pullman bread), which is baked in a mold without a lid, and further, bread made by preparing dough using the same materials as the loaf bread, forming the dough into a hot dog shape, and baking the dough is a hot dog roll.

### (Sweet bun)

The sweet bun of the present invention means bread which has a big implication as a sweet rather than staple food, and which is made, by use of bread dough comprising strong flour, weak flour, powdered milk, sugar, salt, yeast, water, and the like and butter, margarine, or the like, after shaping the dough into an optional shape, by adding sweet confectionery such as chocolate chips on the surface or putting filling such as bean paste, jam, cream, and the like inside, and baking the dough.

### (Danish)

The Danish of the present invention differs from loaf bread and sweet buns in the making method. The Danish is bread prepared by interfolding roll-in fat and oil into wheat flour dough made by use of a kneading fat and oil composition such as margarine and butter and the like. Specifically, the dough is formed by mixing strong flour, weak flour, sugar, salt, yeast, water, and the like together with a kneading fat and oil composition. Examples of the Danish dough include one made by retarding this dough, placing and folding roll-in oil and fat thereon, repeating spreading and folding, and forming many layers, and additionally shaping the layered dough thereafter, and examples of the Danish include one made by final-proofing the dough thereafter and baking the dough. Further, dough made by freezing the Danish dough before or after final proof to enable long-period storage and distribution is frozen Danish dough. European sweet buns in which fillings are topped on the dough or croissants are one form of the Danish.

### (Roll)

The roll of the present invention is bread finished by, using bread dough comprising strong flour, weak flour, powdered milk, sugar, salt, yeast, water, and the like with butter, margarine, or the like, rolling the dough up, and examples of the roll include bread made by baking without placed in a mold. Dough made by freezing the roll dough before or after final proof to enable long-period storage and distribution is frozen roll dough.

### (Dressed bread)

The dressed bread of the present invention means bread made by placing cooked processed food such as pan-fried noodles and sausage on loaf bread, a hot dog roll, a Danish, a roll, and the like above described or sandwiching the food with cut bread. A sandwich using loaf bread is one type of the dressed bread. Additionally, curry bread and a curry doughnut made by wrapping paste filling, such as curry, with bread dough and deep-frying the dough with high-temperature oil are one type of the dressed bread.

### (Steamed bun)

The steamed bun of the present invention means bread finished by braising dough instead of baking. Specifically, examples includes one finished by mixing wheat flour, egg, milk, sugar, salt, baking powder, water, and the like with margarine, butter, or the like, pouring the dough into a manju mold, triangular mold or rectangular mold, and braising the dough in a steamer for about 30 minutes. A cheese steamed bun made by putting a cheese material in the dough is also one type of the steamed bun.

### (Chinese steamed bun)

Examples of the Chinese steamed bun of the present invention include manju made by wrapping a filling, which is made by mincing and boiling pork, onion, bamboo shoot, Chinese mushroom and the like, with a soft crust made by mixing and kneading wheat flour, water, sugar, yeast and the like and fermenting the resulting mixture, and steaming the filling wrapped with the crust. There exist various fillings such as strained bean paste, pizza sauce, and dried curry.

### (Wheat flour baked sweet)

The wheat flour baked sweet of the present invention is a sweet, such as biscuits, sponge cakes, muffins, and pancakes obtained by baking wheat flour dough.

### (Biscuit)

Examples of the biscuit in the present invention include one made by mixing, shaping and baking glucides, such as wheat flour, starch, and sugar, fat and oil, with milk, egg, salt, baking powder, and the like as required as the raw materials. Especially in Japan, among biscuits, those in which the total content of the glucides such as sugar and the oil exceeds 40% by weight of the composition, and those on the surface of which nuts, chocolate chips, dried fruit, and the like are placed or into which nuts, chocolate chips, dried fruit, and the like are mixed may be called cookies. A soft cookie, which achieves soft mouthfeel by including a plurality of doughs different in firmness is one type of the cookies.

### (Sponge cake)

Examples of the sponge cake in the present invention include a baked sweet made by baking wheat flour, sugar, egg, fat and oil, and, as required for the purpose of improving the foamability, emulsified fat and oil and/or an emulsifier, as the raw materials. Foam, which has been formed by mixing egg, emulsified oil and fat and an emulsifier, expands by heat from baking, and dough coagulates with air foam contained by heat denaturation of mixed albumen and gluten and skeleton formation of gelatinized starch to thereby form texture having distinct elasticity. In industrial production, it is necessary to store baked sponge cakes in a frozen state for a long period, and frozen sponge cakes resistant to frozen and chilled distribution are also classified as one type of the sponge cakes.

### (Pie)

The pie of the present invention is prepared by interfolding roll-in fat and oil into wheat flour dough made by use of a kneading fat and oil composition such as margarine, butter, and the like. Specifically, the dough is formed by mixing strong flour, weak flour, sugar, salt, water, and the like together with a kneading fat and oil composition. Examples of the pie dough include one made by retarding this dough, placing roll-in oil and fat thereon and folding them together, and repeating further spreading and folding to form many layers, or one made by further shaping the resultant thereafter, and examples of the pie include one made by baking the pie dough.

The noodles of the present invention refer to udon, somen, Chinese noodles, pasta, and the like.

### (Udon and somen)

Examples of the udon and somen in the present invention include those made by spreading well-kneaded dough of wheat flour and salt as the main raw materials to which starch and edible oil are added as required and processing the dough into lines by drawing or cutting. Udon and somen are distributed in various forms, such as dry noodles, semi-dry noodles, and fresh noodles. According to the JAS standards, dry noodles shaped to a longer diameter of 1.7 mm or more are called "udon", those shaped to a longer diameter of 1.3 mm or less called "somen", and those having a longer diameter between them are called "thin udon" or "hiyamugi".

### (Chinese noodle)

Examples of the Chinese noodle in the present invention include a slightly yellowish elastic noodle which has distinct flavor and elasticity, and is made from wheat flour, brine, and water as the main raw materials by mixing wheat flour with brine and water, kneading the mixture with strong strength to form ball-like dough, taking a maturing process as appropriate, spreading the dough with a noodle rod using dusting flour, and thinly cutting the dough with a kitchen knife and the like. In relation to the cross-sectional shape of the noodle, examples of Chinese noodle include a square noodle made by spreading and just cutting the dough, a round noodle made by shaping the noodle after cutting into a round shape, and a flat noodle shaped by widely cutting the dough.

### (Pasta)

The pasta in the present invention is staple food of Italian cuisine, and examples thereof include those produced by mixing and kneading durum semolina flour, salt, egg, and water as the main raw materials to make dough, and shaping the dough into sticks, plates, and dumplings. There exists fresh pasta, which is eaten as shaped, and dry pasta, which is boiled from its dry state and eaten. Further, when roughly classified on shapes, the pasta is divided into long pasta, such as spaghetti, spaghettini, fedelini, and capellini, and short pasta, such as macaroni, penne, rigatoni, and conchiglie.

### (Water-soluble pea polysaccharide)

The water-soluble pea polysaccharide of the present invention refers to a water-soluble polysaccharide extracted from pea seeds, preferably extracted from the grain part of pea seeds, and more preferably extracted from yellow pea seeds. The production method thereof can be obtained by a production example described below, which is also described in, for example, International Application PCT/JP 2012/065907.

### (Extraction)

Industrially, it is preferred to extract the water-soluble pea polysaccharide with water from a fiber fraction, as the raw material, from which a protein fraction and a starch fraction included in the pea seeds have been removed. It is possible to perform extraction with hot water instead of water. As for the pH at extraction, hydrolysis of the polysaccharide is facilitated under the acidic condition less than pH 3, and desorption and decomposition of the polysaccharide are facilitated on the alkaline side over pH 12. Therefore, a pH from 3 to 12 is preferred, and a pH from 4 to 10 is particularly preferred. After addition of a 5- to 20-fold amount of water to the raw material followed by addition of acid or alkaline to perform adjustment to a range of pH 3 to pH 12, the water-soluble pea polysaccharide is extracted at a temperature of 60°C or more and 150°C or less, preferably of 80°C or more and 130°C or less. As the extraction temperature is decreased, the extraction efficiency of the polysaccharides tends to be decreased. In contrast, when the extraction temperature is too high, there is a case where the polysaccharide is hydrolyzed in the course of extraction to thereby decrease a desired function. The extraction time is approximately 0.5 to 3 hours, but it is possible to arbitrarily adjust the time depending on the condition of the raw material, the temperature, and the like.

### (Purification)

Although the extracted water-soluble pea polysaccharide may be dried as is after the insoluble fiber content is separated by a centrifuge and the like, it is desired to perform purification such as removal of protein, desalting, and removal of a pigment ingredient in order to allow the function to be further exerted. The water-soluble pea polysaccharide subjected to purification treatment as appropriate may be subjected to optional disinfection treatment as required, and then it may be used as in an aqueous solution, or furthermore be subjected to a method such as freeze drying, spray drying, and hot air drying of an ethanol precipitate to obtain a dried material.

### (Starch removal)

In the case where starch remains in the fiber fraction of the pea seeds, which are the raw material of the water-soluble pea polysaccharide of the present invention, it is possible to obtain the water-soluble pea polysaccharide from the raw material as it is, but it is preferred to remove the starch. It is possible to remove the starch by a method such as degradation by amylase. Amylase is the generic name of enzymes which hydrolyze starch, and examples thereof include β-amylase, α-amylase, glucoamylase, and pullulanase.

### (Molecular weight)

The water-soluble pea polysaccharide of the present invention comprises a polymeric component of which molecular weight is 10000 or more as a constituent, and a fraction of which molecular weight is determined to be 10000 or more by analyzing with gel filtration under the following conditions is defined as a polymeric component. It is preferred that the average absolute molecular weight (MM) be from 100000 to 1000000, and it is more preferred that MM be from 200000 to 800000.

Gel filtration used is HPLC (TSK-gel G-5000PWXL: TOSOH CORPORATION ϕ7.8 mm x 300 mm), and the an average absolute molecular weight (MM) is determined by multiangle laser light scattering (MALLS) calibrated with toluene after liquid passage through the column. The analysis conditions are an eluant of a 50 mM sodium acetate aqueous solution (pH 5.0) and a flow rate of 1.0 mL/min, and are performed on an RI detector and an MALLS detector.

### (Constituent saccharide)

The water-soluble pea polysaccharide of the present invention comprises galacturonic acid, which is an acidic sugar, as a constituent saccharide. Additionally, as the main neutral sugars, arabinose and galactose are contained. As other neutral sugars, glucose, rhamnose, xylose, and fucose may be contained. It is preferred that the amount of galacturonic acid, which is an acidic sugar, in the sugar composition be 3 to 40% by weight. Additionally, it is preferred that the amount of the neutral sugars in the sugar composition be 60 to 97% by weight. Additionally, it is preferred that the amount of arabinose as a neutral sugar in the sugar composition be 20 to 50% by weight, and it is preferred that the amount of galactose in the sugar composition be 10 to 30% by weight. The whole sugar content of the water-soluble pea polysaccharide is measured by a colorimetry method using a phenol-sulfuric acid method, and the galacturonic acid content is measured by a colorimetry method using the Blumenkrantz method. The composition of the neutral sugars is measured using an ion chromatography method (HPLC-PAD method) by use of an electrochemical detector, after sulfuric acid decomposition.

### (Combination with other polysaccharide material)

The water-soluble pea polysaccharide of the present invention has the characteristic of not imparting viscosity when it is blended in an aqueous solution, and therefore the viscosity of dough before baking may be lower compared to that with a thickening stabilizer such as pectin. While it is possible to optimize the physical properties of the dough by increasing the amount of the water-soluble pea polysaccharide blended, it is possible in such a case to adjust the physical properties of the dough by blending a gum agent, a thickening agent, a protein or a hydrolyzate thereof as required. Examples of a material that can be combined include polysaccharides such as processed starch, various celluloses, agar, carrageenan, fazeran, guar gum, locust bean gum, fenugreek gum, konjac mannan, tamarind seed polysaccharides, tara gum, gum arabic, tragacanth gum, karaya gum, pectin, xanthan gum, pullulan, and gellan gum, and proteins such as gelatin and collagen.

### (Combination with other functional agent)

There is no difficulty if the water-soluble pea polysaccharide used in the present invention is combined with a functional agent other than polysaccharide materials, for example, a redox agent such as ascorbic acid, potassium bromate, and azodicarbonamide, a glucide, an emulsifier, and an enzyme. Examples of the glucide include glucides and sugar alcohols such as sucrose, trehalose, starch hydrolysates, sorbitol, and reduced starch hydrolysates; examples of the emulsifier include low-molecular surface active agents such as lecitin, fatty acid monoglycerides, glycerin fatty acid esters, and sucrose fatty acid esters; examples of the enzyme include amylolytic enzymes such as β-amylase, α-amylase, glucoamylase, and pullulanase, hemicellulases such as xylanase and glucanase, pectinase or cellulase, proteolytic enzymes such as protease and peptidase; and examples of the ascorbic acids include L-ascorbic acid, dehydroascorbic acid and salts thereof. As the method for addition, a method for addition in which a functional agent homogeneously mixes with other raw materials is preferred as in the case of the water-soluble pea polysaccharide, and the functional agent is generally mixed and added with other powder raw materials.

In the present invention, although the amount of the functional agent added to be combined with the water-soluble pea polysaccharide is depends on functional agents used, it is preferably 0.1 ppm or more and more preferably 1 ppm or more and 1000 ppm or less relative to the weight of wheat flour, if the case of ascorbic acid is exemplified. There is a case where the intended effect is difficult to obtain if the amount is less than 0.1 ppm. In addition to the fact that the effect does not greatly change if an amount more than 1000 ppm is added, there may be a case where the dough became difficult to handle to thereby impair the workability, for example, the dough of wheat-based food becomes strong in tension by the emergence of the excessive influence of the functional agent itself. Additionally, there is a possibility that the appearance after baking becomes worse.

The water-soluble pea polysaccharide used in the present invention can take various forms such as powder, particle, and liquid forms. The water-soluble pea polysaccharide may be powder-mixed together with other raw materials, or may be added after an aqueous solution is prepared in advance. There is no difficulty if any method is selected as long as these are mixed homogeneously with other raw materials. Further, the water-soluble pea polysaccharide can be used in a form of being pre-dissolved in, for example, a water phase of margarine, or kneaded as it is into edible oil, butter, or margarine.

### (Physical property improvement agent for wheat-based food)

In relation to wheat flour dough, in relation to wheat food prepared by baking, oil-cooking, braising and the like, that is bread, wheat flour baked sweets, and noodles, the water-soluble pea polysaccharide of the present invention suppresses changes in the mouthfeel caused by aging of starch, improves the spreadability of the dough, furthermore, increases the volume after baking, and provides mouthfeel with good crispness and meltability in the mouth.

In particular, it is possible to clearly confirm its aging prevention effect during refrigeration storage, and additionally, in the case of where Danishes, rolls, dressed bread, steamed buns, Chinese steamed buns, and the like are reheated with a microwave and eaten, the water-soluble pea polysaccharide exhibits an effect of not only restoring the soft mouthfeel but also allowing the texture to be difficult to become firm again even when it becomes cold. Furthermore, by using the water-soluble pea polysaccharide in noodles, the dough physical properties are enhanced, and aging is suppressed when braised noodles are stored at room temperature or with refrigerating.

The amount of the water-soluble pea polysaccharide added is preferably 0.01% by weight or more and 5% by weight or less and more preferably 0.1% by weight or more and 3% by weight or less relative to the weight of wheat flour. The intended effect is sometimes difficult to obtain if the amount of the water-soluble pea polysaccharide added is less than 0.01% by weight, and the dough may become loose and tacky to thereby worsen the workability if the amount is more than 5% by weight.

### (Prevention of aging of starch)

The water-soluble pea polysaccharide of the present invention has the function of preventing or retarding aging and hardening of starch. Example of the starch as the target on which the present invention functions include, not only the starch contained in the wheat flour itself of the wheat-based food, but also starch contained in barley powder, rice powder, corn grits, mush potato, and the like to be added, and furthermore starch isolated from root vegetables such as potato, sweet potato, cassava, tapioca, dogtooth violet, kudzu, and bracken, beans such as pea and adzuki bean, and grains such as wheat, rice, buckwheat, and corn.

By mixing the water-soluble pea polysaccharide in powdery form or a solution thereof in water with food containing such starch, the water-soluble pea saccharide exhibits an effect of suppressing or retarding the change in the condition of gelatinized starch by heat which occurs during the storage process after cooling, that is, aging and of maintaining the condition of freshly-made food having good mouthfeel (such as viscosity, elasticity, and fluidity).

This effect is observed in bread and baked sweets, and markedly observed in loaf bread, hot dog rolls, and the like, in particular. Also in noodles, in relation to boiled or steamed noodles after braising, it is possible to effectively suppress a phenomenon in which the noodles lose the elasticity, is easily cut, and have crumbly mouthfeel due to aging when stored at room temperature or with refrigerating.

### (Improvement of dough spreadability)

In the present invention, an effect of improving the physical properties is observed in dough prepared by adding water to wheat flour, in particular, the dough of bread and baked sweets. Particularly, when kneaded, folded, and spread by a sheeter in the step of shaping the dough, the spreadability of the dough becomes good and it becomes also possible to suppress shrinkage. Examples of preferred targets include Danishes, croissants, pies, and biscuit dough made by using a sheeter.

### (Increase in the volume after baking)

The present invention can strongly influence an increase in the volume after baking in relation to wheat flour expanded food obtained by baking dough prepared by adding water to wheat flour. These effects are marked in bread, particularly in Danishes and baked sweets, particularly in sponges and the like.

### (Freezing)

In bread further passing through a fermentation process, the present invention concerning to the volume increase described above more markedly appears by freezing the dough. That is, when dough is frozen and distributed, an effect of enhancement in the volume and mouthfeel of the bread after thawing and baking markedly appears by blending the water-soluble pea polysaccharide of the present invention. In this case, in relation to a frozen product, even if freezing and thawing are repeated, an effect of maintaining the volume is high, and an effect of suppressing the physical change in the texture structure due to temperature changes during distribution can be markedly confirmed. Further, the present invention can exhibit the effects more markedly by freezing the prepared dough after final proof.

### (Crispness and meltability in the mouth)

The present invention can impart distinct mouthfeel with good crispness and meltability in the mouth as the mouthfeel after baking in wheat flour expanded food obtained by baking dough prepared by adding water to wheat flour. Specifically, in bread and baked sweets, especially in layered bread such as croissants, or biscuits and the like, the effect is marked. In croissants, while crunchy mouthfeel on the surface is maintained for a long period, mouthfeel without tackiness and dryness is imparted inside, and in cookies, while crispy mouthfeel with less crumbly is imparted, distinct mouthfeel of easy disintegratability in the mouth is imparted. The amount used for the aging prevention effect can be also applied here as an appropriate amount.

### Examples

The present invention will be described by illustlating examples hereinafter, but the technical idea of the present invention is not to be limited to these exemplifications. It should be noted that parts and % in examples mean the weight basis, unless specifically indicated.

### (Manufacture example of a water-soluble pea polysaccharide)

Fifty kilograms of pea seeds were hulled, and water in an amount of five times thereof was added thereto, followed by immersing for 24 hours. The seeds were crushed with a homomixer (5000 rpm, 30 minutes), and protein and starch were extracted. Constituents dispersed in water, such as protein and starch were removed using a centrifuge at 1500 xg for 20 minutes, and fiber was collected. Furthermore, water in an amount of five times of the fiber was added to the fiber and stirred with the homomixer (3000 rpm, 30 minutes), followed by collecting the fiber by centrifugal filtration (1500 xg, 20 minutes). This operation was repeated twice, and freeze drying was performed to thereby obtain 10 kg of pea fiber. In 920 parts of water, 80 parts of the pea fiber were dispersed. After the pH was adjusted to 5 using hydrochloric acid, the dispersion was heated at 120°C for 90 minutes to thereby extract a water-soluble pea polysaccharide. After an amylase (Fungamyl manufactured by Novozymes) corresponding to 0.2 parts relative to 100 part of the pea fiber was added to the extracted liquid to degrade the starch, insoluble fiber was removed by centrifugal separation (5000 rpm, 30 minutes) to thereby collect the supernatant. Ethanol was added to this supernatant so as to achieve the ethanol concentration of 60% by weight to thereby precipitate the water-soluble pea polysaccharide, which was purified with 90 wt% aqueous ethanol. The precipitate obtained was air dried to thereby obtain the water-soluble pea polysaccharide A. In the following examples, the water-soluble pea polysaccharide means the water-soluble pea polysaccharide A, and the water-soluble soy polysaccharide means SOYAFIBE-S-DN (manufactured by Fuji Oil Co., Ltd.), unless specifically noticed.

### (Analysis values of the water-soluble pea polysaccharide)

In accordance with the method described above, the sugar composition and absolute molecular weight of the water-soluble pea polysaccharide were analyzed. The water-soluble pea polysaccharide contained galacturonic acid, which is an acidic sugar like pectin, as a constituent saccharide, and also contained, as neutral sugars, arabinose and galactose as the main constituent saccharides. The polysaccharide was a macromolecular polysaccharide of which average absolute molecular weight was 800000.

**(Table 1) Sugar composition and average absolute molecular weight**

| | Sugar composition (%) | | | | | | | Total sugar amount (%) | Average absolute molecular weight |
|---|---|---|---|---|---|---|---|---|---|
| | GalA | Ara | Gal | Glc | Rha | Xyl | Fuc | | |
| Water-soluble pea polysaccharide A | 16.8 | 40.5 | 22.4 | 6.2 | 6.4 | 7.3 | 0.4 | 92.6 | 800000 |

| | | | | | | | | | |
|---|---|---|---|---|---|---|---|---|---|
| GalA: Galacturonic acid, Ara: Arabinose, Gal: Galactose, Glc: Glucose Rha: Rhamnose, Xyl: Xylose, Fuc: Fucose | | | | | | | | | |

### (Use in loaf bread)

Loaf bread was produced by a straight method on a 5 kg scale in accordance with the blend in Table 2 (Example 1). One hundred parts of strong flour, 2.5 parts of fresh yeast, 5 parts of caster sugar, 2 parts of salt, 3 parts of skim milk powder, 6 parts of shortening, and 1 part of the water-soluble pea polysaccharide were added, and finally 55 parts of water were added. Mixing was performed at a low speed for 3 minutes followed by a middle speed for 6 to 8 minutes, and after fat and oil was added, mixing was further performed at a low speed for 3 minutes, a middle speed for 4 minutes, and a low speed for 2 minutes to perform kneading to 28°C. After a floor time of 50 minutes, fermentation was performed at a temperature of 28°C and a humidity of 70%, and the dough was divided into 220 g. After a bench time of 20 minutes, the dough was placed in a loaf bread mold, was final-proofed at a temperature of 38°C and a humidity of 85% for 50 minutes, and was baked in an oven at a temperature of 230°C for 38 minutes. The water-soluble pea polysaccharide was used by being powder-mixed with wheat flour (strong flour) in advance. In contrast, loaf bread was produced exactly in the same manner except that a water-soluble soy polysaccharide (SOYAFIBE-S-DN: manufactured by Fuji Oil Co., Ltd.) or a succinic acid monoglyceride formulation (POEM B-30: manufactured by RIKEN VITAMIN Co., Ltd.) was used instead of the water-soluble pea polysaccharide. One to which the water-soluble soy polysaccharide was added was Comparative Example 1, one to which the succinic acid monoglyceride formulation was added was Comparative Example 2, and one to which no functional material was added was Comparative Example 3. As the wheat flour, strong flour "Eagle" (manufactured by Nippon Flour Mills Co., Ltd.) was used, as the yeast, fresh yeast "Oriental yeast" (manufactured by Oriental Yeast Co., Ltd.) was used, and as the fat and oil, shortening "PAMPAS PURELE" (manufactured by Fuji Oil Co., Ltd.) was used.

Evaluation of the dough in preparation and results of evaluation on the quality of the baked bread were summarized in Table 2 below. After stood still at room temperature (10 to 20°C) overnight, the baked loaf bread was measured for the volumetric capacity with a 3D-Laser-Scanner (ASTEX Inc.). Sensory evaluation was determined with the average point evaluated by 10 panelists in accordance with a method in which the appearance is rated out of 30 points and the inner phase is rated out of 70 points. Suppression of the dry feeling means suppression of deterioration in the quality due to aging of starch and was evaluated after storage at room temperature (10 to 20°C) for 7 days.

It should be noted that the evaluation items and evaluation symbols mean the following.
Stickiness of the dough in preparation: No; -, Yes; +, Fairly yes; ++
Softening of the dough in preparation: No; -, Yes; +, Fairly yes; ++
Tension of the dough in preparation: No; -, Strong; +, Very strong; ++ Volume of the baked bread: Poor; D, Slightly poor; C, Good; B, Very good; A
Suppression of the dry feeling of the baked bread: Poor; D, Slightly poor; C, Good; B, Very good; A
Flavor of the baked bread: Poor; D, Slightly poor; C, Good; B, Very good; A
Comprehensive evaluation: Poor; D, Slightly poor; C, Good; B, Very good; A

**(Table 2) The composition, preparation method, and evaluation results of the loaf bread**

| | | Example 1 | Comparative Example 1 | Comparative Example 2 | Comparative Example 3 |
|---|---|---|---|---|---|
| (Composition) | | | | | |
| Strong flour | | 100 | ← | ← | ← |
| Fresh yeast | | 2.5 | ← | ← | ← |
| Caster sugar | | 5 | ← | ← | ← |
| Salt | | 2 | ← | ← | ← |
| Skim milk powder | | 3 | ← | ← | ← |
| Shortening | | 6 | ← | ← | ← |
| Water | | 55 | ← | ← | ← |
| Water-soluble pea polysaccharide | | 1 | - | - | - |
| Water-soluble soy polysaccharide | | - | 1 | - | - |
| Succinic acid monoglyceride | | - | - | 1 | - |

| (Evaluation) | | | | | |
|---|---|---|---|---|---|
| During preparation | Stickiness of the dough | - | + | + | - |
| | Softening of the dough | - | + | - | - |
| | Tension of the dough | - | - | - | - |
| After baking | Volume of the bread | A | B | B | B |
| | Dry feeling of the bread | A | B | C | D |
| | Flavor of the bread | A | B | C | A |
| Comprehensive evaluation | | A | C | C | D |

Numeric values are baker's % (the weight based on the whole wheat flour taken as 100 is described)

In the loaf bread obtained by blending the water-soluble pea polysaccharide, the physical properties of the dough were improved, and the workability became good, compared to the physical property improvement materials of Comparative Examples 1 and 2. Additionally, in the loaf bread after baking, by addition of the water-soluble pea polysaccharide, the volume was increased. Further, aging of starch in long-period storage was suppressed to thereby decrease the dry feeling, and good flavor specific to wheat and fermented food was not interfered.

### (Hot dog roll)

Hot dog rolls were produced on a 5 kg scale in accordance with the blend in Table 3. To 100 parts of strong flour, 12 parts of caster sugar, 1.2 parts of salt, 2.5 parts of skim milk powder, 4 parts of yeast, and 60 parts of water, 1 part of the water-soluble pea polysaccharide was added. Mixing was performed at a low speed for 4 minutes, a middle speed for 4 minutes, and a middle-high speed for 2 minutes, and after addition of 5 parts of shortening (PAMPAS LB: manufactured by Fuji Oil Co., Ltd.) was added, mixing was further performed at a low speed for 4 minutes, a middle speed for 3 minutes, and a middle-high speed for 1 minute to perform kneading to 27°C. Fermentation was performed at a temperature of 27°C and a humidity of 75% for 60 minutes, and the dough was divided into 75 g. The dough was shaped into a hot dog shape and arranged on a baking sheet, and after a bench time of 15 minutes, the dough was final-proofed at a temperature of 38°C and a humidity of 75% and baked in an oven with the upper flame at 220°C and the lower flame at 190°C for 12 minutes to thereby obtain hot dog rolls (Example 4). Hot dog rolls were produced exactly in the same manner except that the amount of the water-soluble pea polysaccharide blended relative to the strong flour was 0 part, 0.005 parts, 0.01 parts, 5 parts, and 10 parts to thereby produce hot dog rolls (in sequence, Comparative Example 4, Example 2, Example 3, Example 5, and Example 6).

Evaluation of the dough in preparation and results of evaluation on the quality of the baked bread were summarized in Table 3 below. After stood still at room temperature (10 to 20°C) overnight, the baked hot dog roll was measured for the volumetric capacity with a 3D-Laser-Scanner (ASTEX Inc.). Sensory evaluation was determined with the average point evaluated by 10 panelists in accordance with a method in which the appearance is rated out of 30 points and the inner phase is rated out of 70 points. Suppression of the dry feeling means suppression of deterioration in the quality due to aging of starch and was evaluated after storage at room temperature (10 to 20°C) for 7 days. It should be noted that the evaluation items and evaluation symbols mean the following.
Stickiness of the dough in preparation: No; -, Yes; +, Fairly yes; ++
Softening of the dough in preparation: No; -, Yes; +, Fairly yes; ++
Tension of the dough in preparation: No; -, Strong; +, Very strong; ++
Volume of the baked bread: Poor; D, Slightly poor; C, Good; B, Very good; A
Suppression of dry feeling of the baked bread: Poor; D, Slightly poor; C, Good; B, Very good; A
Meltability in the mouth and disintegratability: Poor; D, Slightly poor;
C, Good; B, Very good; A
Flavor of the baked bread: Poor; D, Slightly poor; C, Good; B, Very good; A
Comprehensive evaluation: Poor; D, Slightly poor; C, Good; B, Very good; A

**(Table 3) The composition, preparation method, and evaluation results of the hot dog roll**

| Composition | | Example 2 | Example 3 | Example 4 | Example 5 | Example 6 | Comparative Example 4 |
|---|---|---|---|---|---|---|---|
| (Composition) | | | | | | | |
| Strong flour | | 100 | ← | ← | ← | ← | ← |
| Yeast | | 4 | ← | ← | ← | ← | ← |
| Caster sugar | | 12 | ← | ← | ← | ← | ← |
| Salt | | 1.2 | ← | ← | ← | ← | ← |
| Skim milk powder | | 2.5 | ← | ← | ← | ← | ← |
| Shortening | | 5 | ← | ← | ← | ← | ← |
| Water | | 60 | ← | ← | ← | ← | ← |
| Water-soluble pea polysaccharide | | 0.005 | 0.01 | 1 | 5 | 10 | - |

| (Evaluation) | | | | | | | |
|---|---|---|---|---|---|---|---|
| During preparation | Stickiness of the dough | - | - | - | - | + | - |
| | Softening of the dough | - | - | - | - | + | - |
| After baking | Tension of the dough | - | - | - | - | - | ++ |
| | Volume of the bread | B | B-A | A | A | C | B |
| | Dry feeling of the bread | C | B | A | A | C | D |
| | Meltability in the mouth and disintegratability | C | A | A | A | B | C |
| | Flavor of the bread | A | A | A | B | C | A |
| Comprehensive evaluation | | C | B | A | A | C | D |

By blending 0.01% by weight to 5% by weight of the water-soluble pea polysaccharide relative to the strong flour (wheat flour) as in Examples 3 to 5, the stickiness, softening, and tension were effectively suppressed in preparing the dough. Additionally, in the baked hot dog rolls, the volume is increased, and soft mouthfeel with good meltability in the mouth is obtained. Additionally, after storage at room temperature for 7 days, dry feeling due to aging of starch was suppressed and the good mouthfeel was maintained.

### (Danish 1: Croissant frozen after final proof)

In accordance with the blend shown in Table 4, croissants were prepared from dough frozen after final proof. That is, to 90 parts of strong flour, 10 parts of weak flour, 8 parts of sugar, 10 parts of egg, 6 parts of yeast, 5 parts of margarine for kneading (PARIOL ACE: manufactured by Fuji Oil Co., Ltd.), and 1.8 parts of salt, 0.02 parts of L-ascorbic acid and 0.01 to 8 parts of the water-soluble pea polysaccharide were added, and finally, 45 parts of water was added, and mixing was performed at a low speed for 5 minutes followed by a middle speed for 6 minutes to perform kneading to 18°C. After a retard was taken at -20°C for 90 minutes, roll-in fat and oil (Atopia GS: manufactured by Fuji Oil Co., Ltd.) was folded into the dough. After three-layer folding was initially performed twice, a retard was taken at -6°C for 45 minutes to rest the dough. Folding into three layers was performed again, and after a retard was taken at -6°C for 60 minutes, the dough was divided into 50 g to thereby be shaped into croissants. After shaping, final proof was taken under conditions of 35°C and a humidity of 80%, and the dough was quick frozen in a shock freezer to thereby prepare the dough. After frozen storage at -20°C overnight, the dough was baked in an oven (the upper flame of 180°C and the lower flame of 180°C) for 24 minutes. After cooled under room temperature for 30 minutes, the volume was measured with a 3D-Laser-Scanner (ASTEX Inc.) and sensory evaluation was performed by 10 panelists (Examples 7 to 12). In contrast, croissants were produced exactly in the same manner except that no functional material was added, or a water-soluble soy polysaccharide was added, instead of the water-soluble pea polysaccharide (Comparative Examples 5 to 11).

Evaluation of the mouthfeel immediately after preparation and after storage at room temperature (10 to 20°C) for 5 days was performed as follows.
A: Very crisp, good crispness, and good meltability in the mouth
B: Crisp, good crispness, and good meltability in the mouth
C: Slightly good crispness
D: Poor crispness

**(Table 4-1) The composition and evaluation results of the croissant frozen after final proof**

| | Example 7 | Example 8 | Example 9 | Example 10 | Example 11 | Example 12 |
|---|---|---|---|---|---|---|
| (Composition) | | | | | | |
| Strong flour | 90 | ← | ← | ← | ← | ← |
| Weak flour | 10 | ← | ← | ← | ← | ← |
| Sugar | 8 | ← | ← | ← | ← | ← |
| Salt | 1.8 | ← | ← | ← | ← | ← |
| Margarine | 5 | ← | ← | ← | ← | ← |
| Yeast | 6 | ← | ← | ← | ← | ← |
| Egg | 10 | ← | ← | ← | ← | ← |
| Water | 44 | ← | ← | ← | ← | ← |
| Water-soluble pea polysaccharide | 0.01 | 0.1 | 1 | 5 | 8 | 1 |
| Water-soluble soy polysaccharide | - | - | - | - | - | - |
| Ascorbic acid (ppm) | 200 | ← | ← | ← | ← | - |

| (Evaluation) | | | | | | |
|---|---|---|---|---|---|---|
| Specific volume (ml/g) | 4.65 | 5.15 | 5.25 | 5.58 | 5.41 | 5.02 |
| Mouthfeel | B | A | A | A | B | A |
| Mouthfeel after 5 days of storage | C | B | B | B | C | B |

**(Table 4-2)**

| | Comparative Example 5 | Comparative Example 6 | Comparative Example 7 | Comparative Example 8 | Comparative Example 9 | Comparative Example 10 | Comparative Example 11 |
|---|---|---|---|---|---|---|---|
| (Composition) | | | | | | | |
| Strong flour | 90 | ← | ← | ← | ← | ← | ← |
| Weak flour | 10 | ← | ← | ← | ← | ← | ← |
| Sugar | 8 | ← | ← | ← | ← | ← | ← |
| Salt | 1.8 | ← | ← | ← | ← | ← | ← |
| Margarine | 5 | ← | ← | ← | ← | ← | ← |
| Yeast | 6 | ← | ← | ← | ← | ← | ← |
| Egg | 10 | ← | ← | ← | ← | ← | ← |
| Water | 44 | ← | ← | ← | ← | ← | ← |
| Water-soluble pea polysaccharide | - | - | - | - | - | - | - |
| Water-soluble soy polysaccharide | 0.01 | 0.1 | 1 | 5 | 8 | 1 | - |
| Ascorbic acid (ppm) | 200 | 200 | 200 | 200 | 200 | - | - |

| (Evaluation) | | | | | | | |
|---|---|---|---|---|---|---|---|
| Specific volume (ml/g) | 4.05 | 4.76 | 5.01 | 5.42 | 5.24 | 4.25 | 3.95 |
| Mouthfeel | D | B | A | A | C | B | D |
| Mouthfeel after 5 days of storage | D | C | B | B | C | D | D |

The results are shown in Table 4. As shown in Examples 7 to 12, the water-soluble pea polysaccharide alone was sufficient, but, by combination with ascorbic acid, the physical properties of the dough of the croissant frozen after final proof was improved, and additionally, an increase in the volume of the croissant after baking and crunchy mouthfeel with good crispness were imparted. This effect was exerted by adding 0.01% by weight to 5% by weight of the water-soluble pea polysaccharide relative to wheat flour. In contrast, the water-soluble soy polysaccharide (Comparative Examples 5 to 11) exhibits a similar function of improving the dough physical properties, and an increase in the volume of the croissant after baking and a function of enhancing mouthfeel, but the minimum amount added to develop the functions was large as much as 0.1% by weight or more, compared to the water-soluble pea polysaccharide, and it has been suggested that the functions of the water-soluble pea polysaccharide are superior. Additionally, deterioration in the mouthfeel due to aging of starch during storage at room temperature after baking was markedly observed by blending 0.1% by weight to 5% by weight of the water-soluble pea polysaccharide to the wheat flour, and this effect was also superior to the water-soluble soy polysaccharide.

### (Danish 2: Freezing-thawing cycle test of the croissant frozen after final proof)

By use of croissants frozen after final poof of Example 9 (water-soluble pea polysaccharide blend group), Comparative Example 7 (water-soluble soy polysaccharide blend group), and Comparative Example 11 (No addition group), freezing-thawing cycle test was conducted. Specifically, 15 croissant dough pieces frozen after final proof were randomly divided into three groups of 5 pieces. After a quick freezing and thawing cycle (-40°C, 60 minutes and 21°C, a humidity of 75%, 30 minutes) was forcibly repeated once, 3 times, and 5 times on each group, the dough pieces were baked in an oven. After cooling under room temperature for 30 minutes, the volume was measured with a 3D-Laser-Scanner (ASTEX Inc.). The results of volume measurement are shown in Table 5.

**(Table 5) Freezing-thawing cycle test of the croissant frozen after final proof**

| Specific volume (ml/g) | Example 9 | Comparative Example 7 | Comparative Example 11 |
|---|---|---|---|
| 1 cycle | 5.16 | 5.00 | 4.04 |
| 3 cycles | 5.02 | 4.80 | 3.57 |
| 5 cycles | 4.98 | 4.63 | 3.42 |

In Comparative Example 11, in which no functional material was added, a marked decrease in the specific volume was observed because the bread dough was subjected to damage each time freezing and thawing were repeated. Also in Comparative Example 7, in which water-soluble soy polysaccharide was added, a decrease in the specific volume was observed. In Example 9, in which the water-soluble pea polysaccharide was added, a decrease in the specific volume was not observed as much as in Comparative Example 7, in which the water-soluble soy polysaccharide was added and Comparative Example 11, in which no polysaccharide was added, and it was shown that the water-soluble pea polysaccharide addition group was the most excellent in the cycle-test resistance.

### (Danish 3: Non-frozen croissant by a scratch manufacturing method)

In accordance with the blend shown in Table 6, croissants by a scratch manufacturing method (non-frozen dough) were prepared. That is, to 90 parts of strong flour, 10 parts of weak flour, 8 parts of sugar, 4 parts of yeast, 5 parts of margarine for kneading (PARIOL ACE: manufactured by Fuji Oil Co., Ltd.), and 1.6 parts of salt, 0.005 parts of L-ascorbic acid and 0.05 to 8 parts of the water-soluble pea polysaccharide were added, and finally, 50 parts of water were added, and mixing was performed at a low speed for 5 minutes followed by a middle speed for 5 minutes to perform kneading to 26°C. After a floor time was taken at room temperature for 60 minutes, the first fermentation was performed at 29°C and a humidity of 70%. After a retard was taken at -6°C for 120 minutes, roll-in fat and oil (Atopia GS: manufactured by Fuji Oil Co., Ltd.) was folded into the dough. Three-folding was performed twice, a retard was again taken at -6°C for 60 minutes, three-folding was further performed once, and the dough was spread to the final dough thickness of 3 mm and divided into 50 g to thereby shape the Danishes. After shaping, final proof was taken under conditions of 32°C and a humidity of 80%, and baking was performed in an oven (upper 230°C and lower 200°C) for 16 minutes. After cooled under room temperature for 30 minutes, the volume was measured with a 3D-Laser-Scanner (ASTEX Inc.) and sensory evaluation was performed (Examples 13 to 17). In contrast, croissants were produced exactly in the same manner except that no functional material was added, or a water- soluble soy polysaccharide was added, instead of the water-soluble pea polysaccharide (Comparative Examples 12 to 17). Evaluations on mouthfeel immediately after preparation and on the extensibility of the dough were performed as follows.

### (Mouthfeel evaluation)

A: Very crisp, good crispness, and good meltability in the mouth
B: Crisp, good crispness, and good meltability in the mouth
C: Slightly good crispness
D: Poor crispness

### (Evaluation on the extensibility of the dough)

5: Extends thin and well, and shrinkage after extension is small
4: Extends well, but slightly shrinks after extension
3: Criteria evaluation
2: Not extends much
1: Finn and poorly extends

(Table 6-1) The composition and evaluation results of the non-frozen croissant by a scratch manufacturing method

| | Example 13 | Example 14 | Example 15 | Example 16 | Example 17 |
|---|---|---|---|---|---|
| (Composition) | | | | | |
| Strong flour | 90 | ← | ← | ← | ← |
| Weak flour | 10 | ← | ← | ← | ← |
| Sugar | 15 | ← | ← | ← | ← |
| Salt | 1.2 | ← | ← | ← | ← |
| Margarine | 5 | ← | ← | ← | ← |
| Yeast | 4 | ← | ← | ← | ← |
| Egg | 10 | ← | ← | ← | ← |
| Water | 50 | 50 | 51 | 55 | 58 |
| Water-soluble pea polysaccharide | 0.05 | 0.1 | 1 | 5 | 8 |
| Water-soluble soy polysaccharide | - | - | - | - | - |
| Ascorbic acid (ppm) | 50 | ← | ← | ← | ← |
| (Evaluation) | | | | | |
| Extensibility of the dough | 4 | 5 | 5 | 5 | 4 |
| Specific volume (ml/g) | 5.46 | 5.75 | 5.82 | 5.84 | 5.42 |
| Mouthfeel | B | A | A | A | B |

**(Table 6-2)**

| | Comparative Example 12 | Comparative Example 13 | Comparative Example 14 | Comparative Example 15 | Comparative Example 16 | Comparative Example 17 |
|---|---|---|---|---|---|---|
| (Composition) | | | | | | |
| Strong flour | 90 | ← | ← | ← | ← | ← |
| Weak flour | 10 | ← | ← | ← | ← | ← |
| Sugar | 15 | ← | ← | ← | ← | ← |
| Salt | 1.2 | ← | ← | ← | ← | ← |
| Margarine | 5 | ← | ← | ← | ← | ← |
| Yeast | 4 | ← | ← | ← | ← | ← |
| Egg | 10 | ← | ← | ← | ← | ← |
| Water | 50 | 50 | 51 | 55 | 58 | 50 |
| Water-soluble pea polysaccharide | - | - | - | - | - | - |
| Water-soluble soy polysaccharide | 0.05 | 0.1 | 1 | 5 | 8 | - |
| Ascorbic acid (ppm) | 50 | ← | ← | ← | ← | - |

| (Evaluation) | | | | | | |
|---|---|---|---|---|---|---|
| Extensibility of the dough | 2 | 5 | 5 | 5 | 4 | 2 |
| Specific volume (ml/g) | 5.05 | 5.32 | 5.78 | 5.74 | 5.16 | 4.82 |
| Mouthfeel | C | B | A | A | C | C |

The results are shown in Table 6. As shown in Examples 13 to 17, the water-soluble pea polysaccharide was good in the spreadability of the dough in the non-frozen croissants, and additionally, imparted an increase in the volume of the croissants after baking and crisp mouthfeel with good meltability in the mouth and good crispness. This effect was sufficiently exerted by adding 0.05% by weight to 8% by weight of the water-soluble pea polysaccharide relative to the wheat flour. In contrast, the water-soluble soy polysaccharide exhibits similar spreadability of the dough and an increase in the volume of the croissant after baking and a function of enhancing mouthfeel, but the amount necessary to develop sufficient functions is large as much as 0.1% by weight or more, compared to the water-soluble pea polysaccharide, and it has been suggested that the functions of the water-soluble pea polysaccharide is superior.

### (Cookie)

By use of the water-soluble pea polysaccharide (Examples 18 and 19) and the water-soluble soy polysaccharide (Comparative Examples 18 and 19), in accordance with the blend shown in Table 7 below, cookies were prepared. First, unsalted butter and caster sugar was mixed and stirred for 3 minutes, egg yolks and fragrance were added to this, subsequently, weak flour, baking powder, and the water-soluble pea polysaccharide or water-soluble pea polysaccharide which were mixed and screened were added. After further mixing and stirring, the dough was rested in a refrigerator for one hour, cut out, and baked at 180°C to thereby obtain cookies. Evaluation on each item of flavor, mouthfeel (crisp feeling), and meltability in the mouth (disintegratability in the mouth) was evaluated by 10 panelists in 5 grades, and the average point was calculated. The results were summarized in Table 7 below. It should be noted that a higher value means better.

**(Table 7) The composition and evaluation results of the cookie**

| | Example 18 | Example 19 | Comparative Example 18 | Comparative Example 19 |
|---|---|---|---|---|
| (Composition) | | | | |
| Weak flour | 100 | ← | ← | ← |
| Caster sugar | 40 | ← | ← | ← |
| Unsalted butter | 50 | ← | ← | ← |
| Egg yolk | 10 | ← | ← | ← |
| Baking powder | 1 | ← | ← | ← |
| Vanilla essence | 0.2 | ← | ← | ← |
| Water-soluble pea polysaccharide | 1 | 5 | - | - |
| Water-soluble soy polysaccharide | - | - | 1 | 5 |

| (Evaluation) | | | | |
|---|---|---|---|---|
| Flavor | 4.5 | 4.4 | 4.2 | 4.2 |
| Mouthfeel (crisp feeling) | 4.4 | 3.9 | 4.2 | 3.6 |
| Meltability in the mouth (disintegratability in the mouth) | 4.3 | 3.8 | 3.2 | 3.5 |

From the evaluation results, by blending the water-soluble pea polysaccharide, crisp mouthfeel with good meltability in the mouth was imparted without adversely affecting on the flavor. This effect was superior to the water-soluble soy polysaccharide having similar functions.

### (Sponge cake)

Sponge cakes were experimentally produced in accordance with the blend shown in Table 8, and mouthfeel and changes in storage were examined. Emulsified oil and fat manufactured by Fuji Oil Co., Ltd. (trade name: Panning H) was used. Mixed were whole egg and sugar, to which emulsified oil and fat, water, weak flour, and baking powder were sequentially added, and 1 part of the water-soluble pea polysaccharide relative to 100 parts of weak flour (Example 20) or 1 part of the water-soluble soy polysaccharide relative to 100 parts of weak flour (Comparative Example 20) was added and mixed. After the specific gravity was finally adjusted to 0.4, the dough was baked at 170°C for 20 minutes. The result immediately after baking and cooling and the result of storage at 20°C for 7 days were shown in Table 8. It should be noted that the results were evaluated by 20 panelists in 5 grades and the average point was calculated. A higher value means better. Further, each sponge cake was stored in a sealed container at 20°C for 7 days. As the firmness (g/cm²), the stress when a sample was compressed to two-thirds was measured with a rheometer (manufactured by Fudo Kogyo Co., Ltd.) using a plunger of which diameter is 40 mm at a table rising rate of 50 mm/minute. In Example 20, a sponge cake was prepared exactly in the same manner except that the water-soluble pea polysaccharide was not added (Comparative Example 21).

**(Table 8) The composition and evaluation results of the sponge cake**

| | Example 20 | Comparative Example 20 | Comparative Example 21 |
|---|---|---|---|
| (Composition) | | | |
| Weak flour | 100 | ← | ← |
| Whole egg | 100 | ← | ← |
| Sugar | 100 | ← | ← |
| Water | 35 | ← | ← |
| Emulsified oil and fat | 15 | ← | ← |
| Baking powder | 2 | ← | ← |
| Water-soluble pea polysaccharide | 1 | - | - |
| Water-soluble soy polysaccharide | - | 1 | - |
| (Evaluation) | | | |
| Flavor | 4.8 | 4.6 | 4.4 |
| Texture | 4.6 | 4.2 | 3.8 |
| Mouthfeel | 4.3 | 4.1 | 3.9 |
| Expansion | 4.4 | 4.3 | 4.2 |
| Hardness immediately after storage (g/cm²) | 46.4 | 48.2 | 52.7 |
| Hardness after 7 days of storage (g/cm²) | 70.2 | 80.5 | 110.8 |

In the case where 1 part of the water-soluble pea polysaccharide was added relative to 100 parts of weak flour, the flavor was good, the texture became better, and changes after storage were smaller because hardening of the texture and mouthfeel due to aging of starch was suppressed. Although the water-soluble soy polysaccharide has a similar function, the sponge cake in the case of being stored for 7 days was harder than the water-soluble pea polysaccharide, and the water-soluble pea polysaccharide was superior in the mouthfeel maintaining effect. In contrast, in the case where neither the water-soluble pea polysaccharide nor the water-soluble soy polysaccharide was added, hardening due to storage was not suppressed, and the quality was markedly impaired.

### (Chinese steamed bun)

In accordance with the blend shown in Table 9, Chinese steamed buns were prepared by an all-in-mix method. The raw materials were mixed, mixing was performed at a low speed for 5 minutes and a middle speed for 1 minutes, and preparation was performed at a kneading temperature of 26°C. Blending was performed such that the water-soluble pea polysaccharide was 1 part relative to the total amount of strong wheat flour and weak wheat flour. The mixed dough was fermented at 28°C and a humidity of 65% for 20 minutes, and after divided to 60 g, stood still for a bench time of 10 minutes, 30 g of Chinese ingredients was encrusted to thereby be shaped into Chinese steamed buns. After final-proofed at a temperature of 35°C and a humidity of 60%, the buns were steamed in a steamer at 103°C for 12 minutes to thereby obtain Chinese steamed buns (Example 21). In contrast, Chinese steamed buns were obtained exactly in the same manner except that a water-soluble soy polysaccharide was added instead of the water-soluble pea polysaccharide (Comparative Examples 22). Furthermore, Chinese steamed buns were obtained exactly in the same manner except that the water-soluble pea polysaccharide was not added (Comparative Example 23). After the Chinese steamed buns prepared by the above method were stored frozen at -20°C for 10 days, the buns were heated in a microwave oven (500 W, 4 minutes 30 seconds), and the condition and mouthfeel at 10 minutes passed after heating were evaluated. The evaluation results were summarized in Table 9 below. The evaluation method was evaluated in 5 grades as follows (5: Very good, 4: Good, 3: Normal, 2: Not very good, 1: Clearly not good), and the average point was calculated. It should be noted that a higher value means better.

(Table 9) The composition and evaluation results of the Chinese steamed bun

| Composition | Example 21 | Comparative Example 22 | Comparative Example 23 |
|---|---|---|---|
| (Composition) | | | |
| Strong flour | 40 | ← | ← |
| Weak flour | 60 | ← | ← |
| Sugar | 10 | ← | ← |
| Salt | 0.5 | ← | ← |
| Baking powder | 1 | ← | ← |
| Yeast | 2.5 | ← | ← |
| Margarine | 8 | ← | ← |
| Water | 55 | ← | ← |
| Water-soluble pea polysaccharide | 1 | - | - |
| Water-soluble soy polysaccharide | - | 1 | - |
| (Evaluation) | | | |
| Condition of the dough before baking | 5.1 | 4.8 | 4.3 |
| Condition after heating by a microwave oven | | | |
| Appearance (shrinkage: wrinkles) | 4.4 | 4.1 | 3.8 |
| Mouthfeel (crispness and tension) | 5.1 | 4.6 | 3.2 |
| Flavor | 4.3 | 4.1 | 3.8 |
| Firmness after 10 minutes | 4.9 | 4.2 | 2.4 |

From the above results, by adding the water-soluble pea polysaccharide to the Chinese steamed buns, the appearance and mouthfeel after heating in a microwave oven, that is, the crispness and tension were improved, and furthermore, the deterioration in the mouthfeel was suppressed by suppressing hardening of starch over time. This effect, in the case of being compared with no addition, was observed by addition of the water-soluble soy polysaccharide, but the water-soluble pea polysaccharide was the most excellent in the effect, from the results of the sensory evaluation.

### (LL udon)

To 100 parts of strong flour, 20 parts of water, 4 parts of salt and the water-soluble pea polysaccharide were added and kneaded to thereby manufacture udon by a conventional method. The udon in a boiled condition was acid-treated (pH4.5) in accordance with a predetermined method, and after sterilization at 90°C for 40 minutes, was cooled to thereby obtain udon (Example 22). In contrast, LL udon was obtained exactly in the same manner except that a water-soluble soy polysaccharide was used instead of the water-soluble pea polysaccharide (Comparative Examples 24). Additionally, LL udon was obtained exactly in the same manner without addition of the water-soluble pea polysaccharide (Comparative Example 25).

On the LL udon, hot soup was poured before eating, and Comparative Example 25 was used as the control. Loosenability, slippery feeling, elasticity, and chewability were evaluated based on the evaluation criteria (5: Very good, 4: Good, 3: Normal, 2: Not very good, 1: Clearly not good) by 12 panelists, and the average on each evaluation item was taken (Table 10).? By taking each evaluation criterion for the loosenability, slippery feeling, elasticity, and chewability of Comparative Example 25 as three points, the remaining Examples and Comparative Examples were evaluated. It should be noted that the higher value means better.

**(Table 10) The evaluation results of the udon**

| | Example 22 | Comparative Example 24 | Comparative Example 25 |
|---|---|---|---|
| Loosenability | 4.4 | 4.2 | 3 |
| Slippery feeling | 4.0 | 3.8 | 3 |
| Elasticity | 3.8 | 3.6 | 3 |
| Chewability | 3.8 | 3.2 | 3 |

From the above results, by adding the water-soluble pea polysaccharide to the LL udon, the loosenability, slippery feeling, elasticity, and chewability were enhanced, and udon having good mouthfeel was obtained. This effect can be obtained by addition of the water-soluble soy polysaccharide, but, at the same amount blended, the effect was inferior to the effect of the water-soluble pea polysaccharide.

## Claims

1. A physical property improvement agent for wheat-based food, comprising a water-soluble pea polysaccharide.

2. The physical property improvement agent according to claim 1, wherein the water-soluble pea polysaccharide is derived from a grain part of a pea seed from which a seed coat is removed.

3. The physical property improvement agent according to claim 1 or 2, wherein the pea is derived from a yellow pea seed.

4. The physical property improvement agent according to claim 1, having any of a function of suppressing starch aging during storage, a function of enhancing spreadability of dough, a function of increasing volume after baking, and a function of enhancing crispness and meltability in the mouth.

5. The physical property improvement agent according to claim 1, wherein 0.01% by weight or more and 5% by weight or less of the physical property improvement agent is blended relative to wheat flour.

6. The physical property improvement agent according to claim 1, wherein the wheat-based food is selected from bread, a wheat flour baked sweet, and a noodle.

7. A wheat-based food, wherein 0.01% by weight or more and 5% by weight or less of the physical property improvement agent according to claim 6 is blended relative to wheat flour.

8. The bread according to claim 6, wherein the wheat-based food is bread and is made by freezing bread dough.

9. The bread according to claim 8, wherein the bread is frozen after final proof.

10. The physical property improvement agent according to claim 6, wherein the wheat-based food is a noodle, and having a function of suppressing starch aging when a braised noodle is stored at room temperature or with refrigerating.

11. The physical property improvement agent for wheat-based food according to claim 1, further comprising ascorbic acid.

12. The physical property improvement agent according to claim 11, wherein the wheat-based food is selected from bread, a wheat flour baked sweet, and a noodle.

13. A wheat-based food, wherein an amount of the physical property improvement agent according to claim 12 added corresponds to 0.01% by weight or more and 5% by weight or less of the water-soluble pea polysaccharide and 0.1 ppm or more of ascorbic acid relative to wheat flour.

14. The wheat-based food according to claim 12, wherein the amount of the physical property improvement agent according to claim 12 added corresponds to 1 ppm or more and 1000 ppm or less of ascorbic acid relative to wheat flour.
